(19) **Europäisches Patentamt**
**European Patent Office**
**Office européen des brevets**

(11) **EP 3 093 687 B1**

(12) **EUROPEAN PATENT SPECIFICATION**

(45) Date of publication and mention
of the grant of the patent:
**14.02.2018 Bulletin 2018/07**

(51) Int Cl.:
***H01Q 3/26*** *(2006.01)*    ***H04B 17/12*** *(2015.01)*

(21) Application number: **16165930.5**

(22) Date of filing: **19.04.2016**

(54) **CALIBRATION NETWORK AND METHOD FOR AN ARRAY ANTENNA**

KALIBRIERUNGSNETZWERK UND -VERFAHREN FÜR EINE GRUPPENANTENNE

RÉSEAU ET PROCÉDÉ D'ÉTALONNAGE POUR UN RÉSEAU D'ANTENNES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **10.05.2015 IL 23871715**

(43) Date of publication of application:
**16.11.2016 Bulletin 2016/46**

(73) Proprietor: **Elta Systems Ltd.
Ashdod 7710201 (IL)**

(72) Inventor: **FRENKEL, Alex
7080000 Gan Yavne (IL)**

(74) Representative: **Becker Kurig Straus
Patentanwälte
Bavariastrasse 7
80336 München (DE)**

(56) References cited:
**EP-A2- 0 127 337    US-B1- 6 236 839**

## Description

## TECHNOLOGICAL FIELD

The present invention is generally in the field of array antennas. More particularly, the present application is directed to a calibration network for a phased array antenna arrangement.

## BACKGROUND

A phased array antenna is typically composed of two or more radiating/antenna elements (antennas) configured to provide an electrically steerable antenna arrangement that can be used to produce directive radiation patterns having a desired gain and/or enhanced sensitivity to radiation incoming from a particular direction. In order to obtain optimal operation conditions (*e.g.*, desired radiation pattern with low side lobes) of the antenna array, the signal transmit/receive paths of each radiating element, from the signal source to the element, should be calibrated from time to time to cancel distortions present in the signal paths (*e.g.*, time delays, phase shifts, gain/attenuation). Calibration data generated during the calibration process is used to cancel/compensate for such distortions by receiving/transmitting signals through the antenna array and thereby assuring that the radiated (transmitted/received) beam is properly formed and correctly directed. Particularly, the calibration data may be used to adjust the phase shift and/or gain of the transmit/receive paths of each radiating element in the array.

Some calibration techniques and equipment for phased array antennas from the patent literature are described below.

European patent publication No. 0 127 337 describes a method for calibrating phase-shift in channels of a system having multiple signal-carrying channels. In this calibration method a reference signal applied as a test signal is supplied to an input of a selected one of the channels and a monotonically increasing phase-shift, in accordance with a predetermined pattern of phase-shift, is introduced between the test signal and the reference signal, resulting in a frequency shift between the test signal and the reference signal. The reference signal is mixed with a sample of an output test signal obtained via an output of the selected channel to produce a beat frequency, an elapsed

time between a reference point of the pattern and a reference point of the beat-frequency signals is measured, and the starting phase-shift of the selected channel is then adjusted in response to the elapsed time.

US patent publication No. 5,977,930 describes a phased array antenna including a number of waveguide radiators in a power supply system. A calibration network directly connected to the waveguide radiators is used for supplying a test pulse to the antenna array. Accurate calibration is obtained by processing any phase and amplitude errors arising in the waveguide radiators in a calibration algorithm.

US patent No. 6,236,839 describes a smart antenna system including: an antenna array including a plurality of antenna elements, and at least one calibration element; a plurality of transceiver units each having a port coupled with an associated one of the antenna elements, a receive port, and a transmit port; a transceiver calibration unit including a port coupled with the calibration element via a coaxial cable, a receive port, and a transmit port; and signal processing means communicatively coupled with each of the receive ports and the transmit ports of each of the transceiver units, and coupled with the calibration receive port and the calibration transmit port of the calibration unit. A transmitter calibration path associated with each antenna element extends from the transmit port of the associated transceiver unit to the associated antenna element, from the associated antenna element to the calibration element, and from the calibration element to the receive port of the calibration unit. A receiver calibration path associated with each antenna element extends from the transmit port of the calibration unit to the calibration element, from the calibration element to the associated antenna element, and from the associated antenna element to the receive port of the associated transceiver unit. The signal processing means is responsive to transmit mode resultant signals developed as a result of reference signals propagating through associated transmitter calibration paths. The signal processing means is also responsive to receive mode resultant signals developed as a result of reference signals propagating through associated receiver calibration paths.

## GENERAL DESCRIPTION

There is a need in the art for compact calibration arrangements whose geometrical shape/structure can be easily and rapidly adjusted to obtain electromagnetic coupling between electromagnetic couplers thereof and radiating/antenna elements of an array antenna. There is also a need in the art for techniques for generation of calibration data that permit accurate tuning of the signal receive/transmit paths of radiating elements of array antenna arrangements, and cancellation of artifacts (e.g., compensate errors resulting from manufacturing processes, element replacement, tolerances and component aging) introduced into the calibration data by the calibration arrangement.

Conventional calibration systems for array antennas usually utilize types of rigid and bulky waveguide systems or microstrips. Conventional calibration systems have signifcant losses, have limited wavelength bands, provide poor signal-to-noise ratios, and also impose various limitations on the design and arrangement of the calibration system due to the wavelength dependence and polarization restrictions they impose (*i.e.,* requiring the antenna elements to be of a specific particular polarization).

Typically, electromagnetic couplers in calibrating infrastructures of such conventional systems are mechanically attached to the antenna element and establish direct contact therewith, resulting in high coupling levels. In many cases such high coupling levels between the radiating elements and the electromagnetic couplers is undesirable, as it interferes with the overall performance of the radiating elements during signal transmission and reception (because the calibrating infrastructure behaves like a coupled antenna).

The present invention is directed to a calibration technique for calibrating antenna arrays such as phased arrays. More specifically the present invention provides a method and a system for calibration of an antenna array by using a calibration network including a manifold of transmission line(s) coupled to the antenna elements of the antenna array. Optionally, and in some embodiments preferably, a low level of coupling is employed between the radiating/antenna elements and the coupling sites of the calibration network, thereby substantially reducing, or eliminating, introduction of interferences in the operation of the antenna array by the calibration network.

The calibration system of the present invention includes a flexible/semi-rigid calibration system (calibration network) comprising a shielded transmission line (*e.g.*, a cable having a Faraday shield) with one or more coupling sites (electromagnetic couplers) arranged therealong and adapted for electromagnetic coupling the calibration network to one or more radiating elements (*e.g.*, antenna elements) of the antenna array. The shielded cable may be for example a coaxial cable such as flexible and/or semi rigid coaxial cable. This allows transmission/propagation of electric signals in a broadband of frequencies and in a polarization invariant manner, thus facilitating feed/reception of signals from a plurality of antenna elements which may be operational for radiating the electric signals (*i.e.*, transmitting/receiving electromagnetic waves corresponding to those signals) in various frequencies and/or with various polarizations. In some embodiments the coupling sites are formed at one or more sections along the length of the shielded cable, by exposing the shield of the cable at those sections so as to allow electromagnetic coupling between the cable and antenna elements that are placed adjacent to the coupling sites. Alternatively/or additionally, for the same purpose electromagnetic coupling module (*e.g.*, radiators) may be furnished on the cable at the coupling sites.

The shielded cable based calibration network/system of the present invention is substantially more compact and flexible than the waveguide/microstrip based solutions, its geometrical dimension and also the locations and dimensions of the coupling sites are generally independent of the wavelength/frequency band of the antenna array (which matches the wavelength/frequency of the calibration signals passed through the calibration network) and are independent of the polarization of the radiating elements to which it is electromagnetically coupled.

The flexibility/elasticity of the calibration network of the present invention which is formed with a flexible/semi-rigid cable, permits manually/instantaneously adjusting the shape of the calibration network (*e.g.*, during installation or before each use) for placement of some, or all, of the coupling sites in the vicinity of some, or all, of the radiating elements of the array, thereby permitting the calibration network to communicate electromagnetic signals with the radiating elements of the array antenna. The calibration network may be therefore mounted in the vicinity of the radiating elements (*e.g.*, near a signal input region thereof), without requiring direct contact/connection between the coupling sites and the radiating elements, and it may be used to provide a removable and shape-adjustable calibration network for any array antenna arrangement. Though the coupling sites of the calibration network may be placed in close adjacency (*i.e.*, contacting or almost contacting) the radiating elements, in preferred embodiments the coupling sites are placed at some distance (*e.g.*, up to a few centimeters) from the radiating elements to obtain relatively low coupling levels, and thereby reduce, or eliminate, interferences in the performance of the radiating elements.

In some embodiments the calibration network is implemented using a bendable shielded cable comprising one or more coupling sites along its length, each configured to couple/convert a predetermined fraction of the signals propagating therethrough to/from electromagnetic radiation radiating between a respective antennal element of the antenna array and the coupling site. This implementation of the calibration network by an elastic or flexible/emi-rigid shielded cable permits easily bending and twisting the calibration network line to properly shape it for passage adjacent (*i.e.*, contacting or almost contacting) to the at least some, or all, radiating elements of the array antenna. Optionally, and in some embodiments preferably, the coupling sites of the calibration network do not contact the radiating elements to which they are coupled, by placing them at some distance (*e.g.*, of one or more centimeters), to thereby provide low coupling levels therebetween.

As indicated above, the shielded transmission line may be a coaxial cable having a central conductor covered/enclosed by one or more dielectric layers, one or more shielding layers made from electrically conducting material (*e.g.*, made from bare/tinned braided copper wires, a conductive foil tape such as aluminum, a corrugated/smooth solid copper or aluminum tube outer conductor, or any combination thereof) covering (enclosing/wrapping) the central conductor and dielectric layer(s). Optionally the cable also includes an electrically insulating jacket (*e.g.*, made of PVC) covering the one or more shielding layers. The signal transmitting line (shielded cable) of the calibration network comprises a plurality of couplers formed at certain coupling sites along the signal transmitting line, each coupler positioned to be adjacent to at least one radiating element of the array antenna. In possible embodiments two or more couplers are formed at each coupling site to communicate electromagnetic signals with a corresponding number of two or more adjacently located antenna elements of the array.

In use, an end portion of the signal transmitting line (*e.g.*, of the coaxial cable) serving as signal input/output terminal/port of the calibration network (*e.g.*, furnished with a suitable connector), is connected to a transmitter and/or receiver (generally transceiver) adapted for transmitting and/or receiving electromagnetic signals through the calibration network. A matched load may be connected to another end of the signal transmitting line to absorb residuals of the electric signals which propagate through the shielded cable and not radiating via the coupling site, thereby preventing signal reflections within the cable.

The geometrical dimensions of each coupler/coupling site may be adjusted (a priori selected) according to a radiation pattern/profile to be emitted through it. In some embodiments the geometrical sizes of the couplers are also adjusted/selected according to their distances from the signal input/output terminal and the gain attenuation of signal propagating between them and the terminal in order to provide that a desired level/intensity of electromagnetic signals (*e.g.*, as per system requirements) are emitted through them in response to supply of electric signal by the transceiver via the input/output terminal and vice-versa. In other words, the couplers are configured such that the electric couplings between each of them and the input/output terminal are of a desired (or of the same order of) magnitude (not necessarily equal) so as to enable calibration of antenna elements coupled to different coupling sites with somewhat predefined calibration sensitivity.

Accordingly, the electromagnetic coupling obtained between each coupler of the calibration network to a radiating element of the array antenna can be adjusted by properly setting the geometrical dimensions of the coupler.

In some embodiments, the couplers are preferably implemented by apertures formed in the shielding layer(s) of the signal transmitting line at each coupling site of the calibration network, and the geometrical dimensions (*e.g.*, size and/or shape) of each aperture may be adjusted to provide a predetermined radiation profile/pattern through the apertures of the calibration network. For instance, a length and/or width of each aperture may be adjusted according to a distance of the aperture from the input/output terminal of the calibration network, and/or according to geometrical properties of other apertures of the calibration network *e.g.*, the geometrical dimensions of the apertures may be determined by means of a computerized simulation.

The geometrical properties of one or more apertures of the calibration network may be further adjusted to supply electromagnetic radiation to a number of adjacently located radiating elements of the array antenna. By way of example, the width of each aperture may be adjusted to define a certain angle of radiation (relative to the center of the cable) suitable for radiating an adjacently located radiating element with desired radiation patterns (*e.g.*, having a determined intensity and/or direction). Alternatively or additionally, the angle of radiation may be adjusted according to the geometrical dimensions of the adjacently located radiating elements to guarantee that determined radiation patterns are supplied to it.

In some embodiments a single coupling site may comprise a certain number of couplers (apertures) circumferentially arranged thereabout. For example, several apertures may be circumferentially arranged at a certain coupling site by properly adjusting the angle of radiation and length of each aperture. Accordingly the apertures of the calibration network may be set to provide angles of radiation in the range of 1° to 5°, 1° to 180° degrees, or, in some possible embodiments, up to 360°.

One inventive aspect of the present application relates to a calibration network for an antenna array, comprising a shielded signal transmission line having an electrically conducting wire coaxially passing along an electrically conductive shielding sleeve electrically insulated therefrom. The shielded signal transmission line is configured and operable to propagate signals along its length and comprises one or more electromagnetic coupling sites spaced-apart along its length and adapted for coupling said calibration network with a certain number of antenna elements of an antenna array. Each electromagnetic coupling site comprises at least one aperture formed in said electrically conductive shield of the signal transmission line for electromagnetic coupling between the signal transmission line and the radiating elements.

In some applications the shielded signal transmission line is a bendable coaxial structure (*e.g.*, coaxial cable) allowing adjusting the shape of the calibration network to position the electromagnetic coupling sites adjacent the antenna elements to be thereby electromagnetically coupled therewith. Optionally, at least one of the electromagnetic coupling sites comprises more than one aperture arranged about a circumference of a portion of the signal transmission line length.

Properties of the electromagnetic coupling sites may be configured to electromagnetically couple a predetermined fraction of a signal passing along the shielded transmission line to their respective antenna elements via the apertures. For example, and without being limiting, at least one of a distance between at least some of the electromagnetic coupling sites and sizes of at least some of the electromagnetic coupling sites is selected to adjust magnitudes of the fractions of the coupled signals. This may be achieved, for instance, by increasing geometrical dimensions or sizes of at least some of the apertures according to a distance of the coupling site from an end portion of the signal transmission line serving as a signal input/output terminal.

The calibration network may comprise a matched load coupled to the signal transmission line.

Another inventive aspect of present application relates to a calibration system comprising the calibration network according to any one of the embodiments described hereinabove or hereinbelow. In some embodiments the system comprises a calibration transceiver module connected to an input/output terminal of the calibration network and adapted to transmit and/or receive calibration signals propagating via the calibration network so as to electrically couple the signals with antenna elements of an antenna array that are located adjacent to the coupling sites of the calibration network. A reference data module may be used to store referenced data indicative of propagation parameters of the calibration network in between the input/output terminal and the antenna elements. The calibration system may use a processing module connectable to respective transmit/receive (TR) modules of the antenna elements of the antenna array, and to the calibration transceiver module, to determine one or more parameters of signal paths associated with the antenna elements.

For example, and without being limiting, the processing module may be configured and operable to operate the calibration transceiver and at least one of said TR modules associated with at least one antenna element to transmit and receive therebetween calibration signals propagating along a calibration signal path. The calibration signal path may comprise the TR module of the antenna element, the antenna element, and a portion of the transmission line extending in between the antenna element and the input/output terminal, to thereby enable determining one or more propagation parameters of the calibration signal path. The processing module may then utilize the one or more parameters of the calibration signal path and the reference data to determine one or more parameters (*e.g.*, a gain attenuation of the signal path, phase delay via said signal path, and suchlike) of a signal path of the antenna element. The signal path of the antenna element may comprise the TR module of the antenna element and the antenna element.

Yet another inventive aspect of present application relates to an antenna system comprising an antenna array comprising an arrangement of a plurality of antenna elements, and a calibration network according to any one of the embodiments described hereinabove or hereinbelow. The transmission line of the calibration network may be arranged such that its coupling sites are positioned adjacent to the antenna elements to be thereby electromagnetically coupled therebetween. Optionally, and in some embodiments preferably, the coupling sites of the calibration network are spaced apart from their respective radiating elements so as to obtain a desired level of electromagnetic coupling therebetween. For example, and without being limiting, the distance between the coupling sites and their respective radiating elements is adjusted to provide a low level of signal coupling therebetween.

In some applications the antenna system comprises a calibration system according to any one of the embodiments described hereinabove and hereinbelow.

Another inventive aspect of the present application relates to a method of calibrating signal paths of antenna elements of an antenna array. The method comprises providing a calibration network comprising a shielded signal transmission line having an end portion serving as a signal input/output terminal for transmitting and/or receiving signals propagating through the transmission line and a plurality of electromagnetic coupling sites respectively arranged adjacent to the antenna elements so as to provide electromagnetic coupling between the transmission line and the antenna elements, providing reference data indicative of propagation parameters of the calibration network in between the input/output terminal and the antenna elements, and determining propagation parameters of a signal path of at least one antenna element of the antenna array.

Determining of the propagation parameters of at least one antenna element of the antenna array may comprise transmitting a calibration signal to propagate along a calibration signal path (*e.g.*, comprising the antenna element, a portion of the shielded transmission line in between a coupling site coupled to the antenna element and the input/output terminal, and a transmit/receive (TR) module coupled with the antenna element. The transmitted signal is then detected for determining one or more propagation parameters of the calibration signal path. The propagation parameters of the calibration signal path and the propagation parameters of the calibration network indicated by the reference dada can be then used to determine one or more signal path parameters of the antenna element, thereby enabling in-*situ* calibration of antenna elements of the antenna array.

The reference data may include propagation parameters of the calibration network indicative of at least one of phase shifts and gain attenuations associated with propagation of signals in between said input/output terminal of the signal transmission line and the antenna element, of the one or more propagation parameters of the calibration signal path including at least one of a propagation phase delay and propagation gain attenuation along the calibration signal path. The determining of the one or more signal path parameters of the antenna element may thus include processing the one or more propagation parameters of the calibration signal path and the propagation parameters of the calibration network to determine at least one of a phase shift and a gain attenuation associated with transmission and/or reception of a signal via the antenna element and the TR module coupled thereto.

The provision of the reference data may comprise determining data indicative of the propagation parameters of the calibration network in between the input/output terminal and the antenna elements. This may be carried out by transmitting a test signal to propagate along a first path that comprises a transmit/receive (TR) module associated with the antenna element of the array, and at least a portion of the calibration network in between a coupling site thereof coupled to the antenna element and the input/output terminal. The transmitted test signal is then measured to generate data indicative of propagation parameters thereof. A probe signal is transmitted to propagate along a second path comprising said antenna element and the TR module associated with the antenna element, and the transmitted probe signal is then measured to generate data indicative of propagation parameters thereof. The data of the propagation parameters of the test and the probe signals is processed to determine propagation parameters of the calibration network in between the input/output terminal and the antenna element.

The method may be adapted to separately calibrate transmit and receive paths of the antenna element. For example, in the calibration of the receive path, the calibration signal may be injected to the signal path via the input/output terminal and received by the TR module of the antenna element, and in calibration of the transmit path, the calibration signal may be injected to the signal path by the TR module of the antenna element and received at the input/output terminal.

In some embodiments the signal transmission line of the calibration network comprises a coaxial transmission line having an electrically conducting wire coaxially passing within an electrically conductive shielding sleeve electrically insulated therefrom, and the coaxial transmission line is bent for passing adjacent to each antenna element of the array antenna, such that apertures formed in the shielding sleeve of the coaxial transmission line serving as coupling sites, are located in the vicinity of the antenna elements, thereby electromagnetically coupling between the coaxial transmission line and the antenna elements.

The method may comprise forming two or more apertures in at least one of the coupling sites. For example, and without being limiting, the two or more apertures in the at least one coupling site may be distributed about a circumference of the coaxial transmission line.

The method may comprise adjusting geometrical dimensions of at least some of the apertures to guarantee coupling of a predetermined fraction of a signal passing in the coaxial transmission line through them. Additionally, a distance between at least some of the coupling sites may be adjusted/selected to guarantee coupling of a predetermined fraction of a signal passing in the coaxial transmission line through them. Furthermore, a distance between at least one of the coupling sites and its respective radiating element may be adjusted to provide a predetermined level of signal coupling therebetween.

## BRIEF DESCRIPTION OF THE DRAWINGS

In order to understand the invention and to see how it may be carried out in practice, embodiments will now be described, by way of non-limiting example only, with reference to the accompanying drawings. Features shown in the drawings are meant to be illustrative of only some embodiments of the invention, unless otherwise implicitly indicated. In the drawings like reference numerals are used to indicate corresponding parts, and in which:

**Fig. 1** schematically illustrates a calibration network according to some possible embodiments;

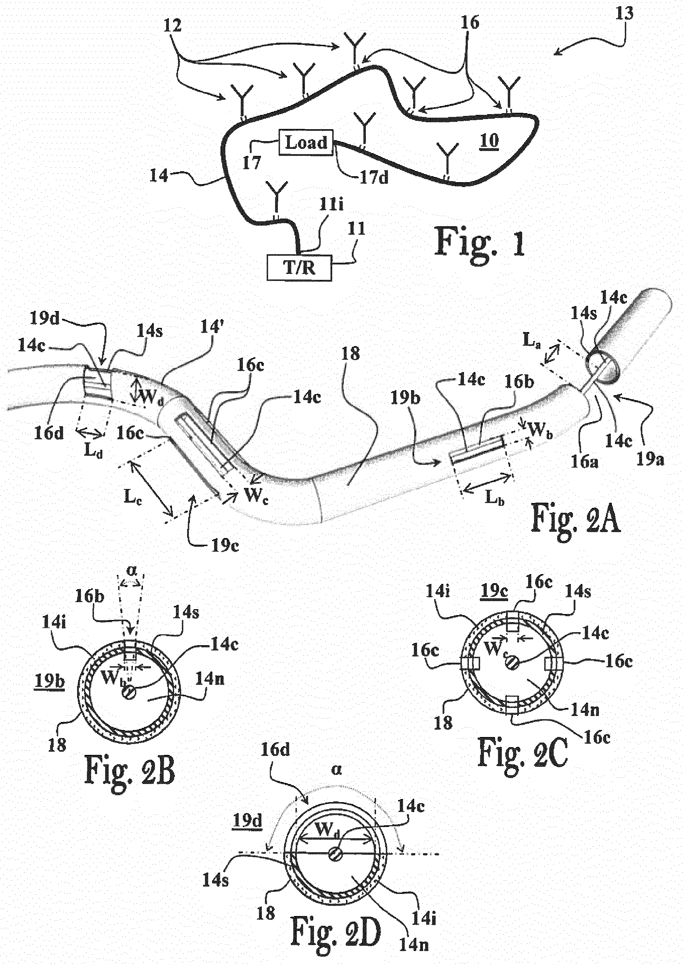

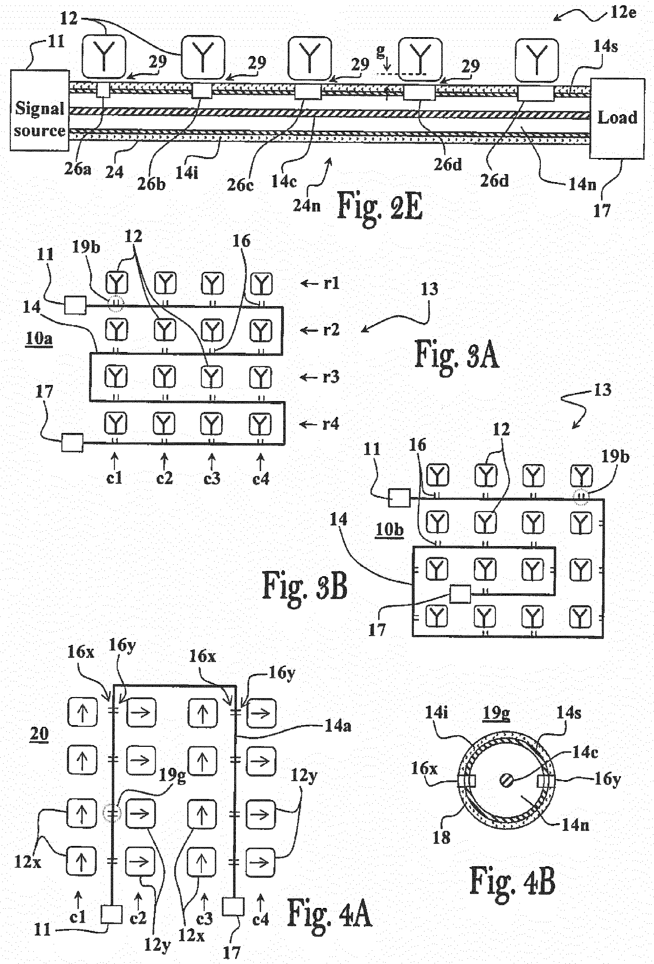

**Figs. 2A** to **2E** exemplify possible embodiments of the coupling sites of the calibration network according to some possible embodiments, wherein **Fig. 2A** demonstrates possible implementations of coupling sites along a signal transmitting line of the calibration network, **Fig. 2B** is a cross-sectional view of a coupling site implemented in the form of a slender aperture, **Fig. 2C** is a cross-sectional view of a coupling site comprising a plurality of circumferentially distributed spaced-apart slender apertures, **Fig. 2D** is a cross-sectional view of a coupling site implemented in the form of an angled aperture, and **Fig. 2E** shows a longitudinal-section view of a signal transmitting line of a calibration network comprising a plurality of apertures distributed along the length of the cable and having certain geometrical sizes;
**Figs. 3A** and **3B** schematically illustrate exemplary deployments of calibration networks according to some possible embodiments, wherein **Fig. 3A** demonstrates a serpentine arrangement of the calibration network and **Fig. 3B** demonstrates a spiral arrangement of the calibration network;
**Figs. 4A** and **4B** schematically illustrate an exemplary deployment of a calibration network according to some possible embodiments having two couplers at each coupling site, where **Fig. 4A** demonstrates use of the calibration network with an antenna array having two adjacent radiating elements having different polarizations at each coupling site, and **Fig. 4B** is a cross-sectional view of the signal transmitting line of the calibration network at one of the coupling sites;
**Fig. 5** shows a cross sectional view of a coupling site of the calibration network according to some possible embodiments adapted to communicate electromagnetic signals with a plurality of radiating elements;
**Fig. 6** schematically illustrates a possible calibration network arrangement according to a possible embodiment for an array antenna comprising one or more cells of radiating elements;
**Fig. 7** is a flowchart schematically illustrating a method of installing a calibration network according to some possible embodiments;
**Figs. 8A** to **8D** are block diagrams exemplifying calibration of signal paths of an array antenna according to some possible embodiments, wherein **Figs. 8A** and **8B** exemplify determination of calibration data of receive and transmit paths respectively, **Fig. 8C** demonstrates a possible system for determining the calibration data of the receive and transmit paths, and **Fig. 8D** demonstrates using the calibration data for calibration of the array antenna;

    **Fig. 9** is a flowchart exemplifying a procedure for determining the calibration data according to possible embodiments; and

    **Figs. 10A** and **10B** are flowcharts illustrating use of the calibration network and the calibration data according to possible embodiments for calibrating the array antenna.

## DETAILED DESCRIPTION OF EMBODIMENTS

The various embodiments of the present invention are described below with reference to the drawings, which are to be considered in all aspects as illustrative only and not restrictive in any manner. Elements illustrated in the drawings are not necessarily to scale, emphasis instead being placed upon clearly illustrating the principles of the invention. This invention may be provided in other specific forms and embodiments without departing from the essential characteristics described herein.

**Fig. 1** schematically illustrates a calibration network structure **10** according to some possible embodiments. The calibration network **10** is preferably a bendable structure that can be easily bent and twisted to assume a desired three-dimensional shape, and comprises one or more couplers **16** positioned along the calibration network **10**. As exemplified in **Fig. 1**, the shape of the calibration network **10** and/or the locations of the couplers **16** may be conveniently adjusted in two-dimensional, or three-dimensional, space, according to locations of radiating (antenna) elements **12** of the array antenna **13.**

A transceiver (**T/R**) **11** may be coupled to an input terminal **11i** at one end of the calibration network **10** for supplying electromagnetic signals to the calibration network **10**. In possible embodiments a matched load **17** is coupled at the other end **17d** of the calibration network **10** to prevent signal reflections.

**Fig. 2A** schematically illustrates a possible embodiment of a calibration network **14'** implemented using a signal transmitting line (*e.g.*, shielded cable) **18** having a central electrically conducting wire **14c** concentrically passing along an electrically conducting shielding sleeve **14s**. The calibration network **14'** comprises couplers **16a**, **16b**, **16c** and **16d** (collectively referred to as couplers **16**), implemented by apertures formed in the shielding sleeve **14s** of the cable **18** at a number of spaced-apart coupling sites **19a**, **19b**, **19c** and **19d** (collectively referred to as coupling sites **19**), along the signal transmitting line **18**. In this non-limiting example the couplers **16** formed at coupling sites **19** are of different geometrical shapes and arrangements.

In possible embodiments a coupling site **19** of the calibration network **10** may include a coupler **16** in the form of an aperture in the shielding structure **14s** of the cable **18** having predetermined geometrical dimensions suitable for producing a desired pattern/profile of electromagnetic radiation therethrough. For example, and without being limiting, a single coupler **16b** may be formed in the coupling site **19b** by an aperture having a certain length $L_b$ and width $W_b$ configured to provide the desired radiation pattern through the aperture.

**Fig. 2B** shows a cross-sectional view of the signal transmitting line **18** (*e.g.*, coaxial cable) at the coupling site **19b** in which the coupler **16b** is formed. As exemplified in **Fig. 2B**, the cable **18** may comprise one or more dielectric layers **14n** disposed between the central wire **14c** and the concentric shielding sleeve **14s** of the cable **18**, and one or more electrically insulating jackets **14i** covering the shielding sleeve **14s** of the cable **18**. **Fig. 2B** further demonstrates an angle of radiation $\alpha$ from the coupler 16b defined by the width $W_b$ of its aperture.

Referring back to **Fig. 2A,** the coupler **16d** is implemented by an aperture of different geometrical dimensions having a smaller length $L_d$, but a greater width $W_d$ configured to provide the desired radiation pattern at coupling site **19d**. For instance, as exemplified in **Fig. 2D**, the coupler **16d** may be implemented by a circumferential aperture having a 180° angle. As another non-limiting example, a coupler **16a** can be formed by an aperture having a certain length $L_a$ by completely (or almost completely) removing the shielding sleeve **14s** at the coupling site **19a** *(i.e.,* by forming a circumferential aperture of about, or exactly, 360°), to thereby provide radiation of electromagnetic radiation in all radial directions.

The cable **18** may also include coupling sites **19** comprising a plurality of couplers **16c** implemented by angularly spaced apertures circumferentially distributed over the shielding structure **14s.** As seen in **Fig. 2C**, coupling site **19c** comprises four couplers **16c**, each having predetermined length $L_c$ and width $W_c$. In this non-limiting example the couplers **16c** are evenly distributed about the circumference of the cable **18** with a 90° angular displacement between each pair of adjacently located couplers **16c.** Of course, the number of couplers **16c** formed in the coupling site **19c** may be greater or smaller than that exemplified in **Fig. 2C**, by properly adjusting the lengths and/or widths of the couplers **16c.**

Although the apertures of the couplers **16** exemplified in **Fig. 2A** are of rectangular shape, it should be clear that any other geometrical shape may be used without departing from the scope and spirit of the present invention. For example, and without being limiting, the shape of at least some of the apertures may be square, circular, elliptical, triangular, polygonal, or any combination thereof.

The central electrically conducting wire **14c** of the signal transmitting line **18** may be fabricated from any suitable flexible/bendable (or elastic) electrically conducting material, such as, but not limited to, copper, aluminum, gold, steel, silver, or a combination thereof (*e.g.,* StCuAg), having a diameter of about 0.2 to 2 mm, preferably about 0.29 to 1.63 mm. For example, and without being limiting, the central electrically conducting wire **14c** may be implemented by a stranded wire or by a solid wire.

The dielectric layers **14n** surrounding the central electrically conducting wire **14c** may be prepared from any suitable flexible/elastic electrically insulating material, such as, but not limited to, PTFE. The shielding sleeve **14s** may be fabricated from electrically conducting materials suitable for production of flexible/elastic foils or wire braids, for example, and not limited to, aluminum. The diameter of the shielding sleeve **14s** may generally be in the range of 1.1 to 7 mm, preferably about 1.19 to 6.35 mm, and its thickness about 0.1 to 2 mm, preferably 0.15 to 1.04 mm. The optional electrically insulating jackets **14i** covering the shielding sleeve **14s** may be prepared from any suitable flexible/elastic electrically insulating material. The signal transmitting line **18** may be manufactured by employing the cable production technique known in the industry, for example, as used in coaxial cable production.

**Fig. 2E** depicts a calibration network **24n** for an antenna array **12c**. Calibration network **24n** comprises a shielded signal transmission line **24** having an electrically conducting wire **14c** coaxially passing along an electrically conductive shielding sleeve **14s** electrically insulated therefrom. The shielded signal transmission line **24** is configured and operable to propagate electromagnetic signals along its length and comprises one or more electromagnetic coupling sites **29** spaced-apart along its length and adapted for coupling said calibration network **24n** with a certain number of antenna elements **12** of antenna array **12c**. As seen, each electromagnetic coupling site **29** comprises at least one aperture **26** formed in said electrically conductive shield **14s** of the signal transmission line **24** for electromagnetic coupling between said signal transmission line **24** and said radiating elements **12**. The calibration network **24n** may be spaced apart from it respective radiating element **12** to form a predefined air gap g therebetween, and thereby provide for substantially low coupling levels between the calibration network **24n** and the radiating elements **12**. Such low coupling levels prevent introductions of interferences by the calibration network **24n** during operation of the radiating elements **12**.

In some embodiments it is required to provide the same, or somewhat different, radiation pattern(s) from the plurality of couplers distributed along the signal transmitting line. **Fig. 2E** shows a longitudinal-section view of the calibration network **24n** comprising the couplers **26a, 26b, 26c...,** (collectively referenced by reference numeral **26**) positioned spaced-apart along the signal transmitting line **24** of the calibration network. In this non-limiting example the apertures of couplers **26** located closer to the signal source **11** have smaller geometrical sizes, and sizes of the apertures located closer to the matched load **17** have greater geometrical sizes. For instance, the width of each coupler **26** may be substantially the same and the length of each coupler **26** is adjusted to provide a desired radiation pattern therefrom by adjusting the length of its aperture according to its distance (*i.e.,* signal transmitting line **24**) from the signal source **11**.

As seen, the apertures of the various couplers exemplified in **Figs. 2B** to **2E** may also pass through the electrically insulating jacket **14i**, and their formation may also involve partial (or entire) removal of the dielectric layers **14n** at the respective coupling site. In some possible embodiments, the installation of the calibration network comprises installing the signal transmitting line **18** to pass in the vicinity of some, or all, of the radiating elements **12**, and thereafter creating the couplers **16** by forming respective apertures in the shielding sleeve **14s**, and connecting the matched load **17** to the end of the cable **18**. Though the apertures formed in the cable **18** for the couplers **16** may have substantially the same geometrical sizes, in some embodiments the geometrical dimensions of each aperture are determined according to its distance (measure along the cable) from the signal source and/or its distance from other couplers **16** to obtain a desired radiation pattern therefrom. Optionally, and in some embodiments preferably, the apertures of the couplers are formed near a signal input region of the radiating elements.

As exemplified hereinabove, the calibration network **14** of the present invention may be implemented using flexible/semi-rigid shielded cable lines (*e.g*., coaxial cables) comprising one or more couplers **16**. Thus, the shielded cable lines of the calibration network **14** may be bent and twisted to form a two/three-dimensional shape suitable for positioning the couplers **16** in the vicinity of radiating elements **12** of an array antenna **13**. **Figs. 3A** and **3B** schematically illustrate possible arrangements of a calibration network **14** designed for calibration of an antenna array **13** comprising a two dimensional array of radiating elements **12**.

**Fig. 3A** demonstrates a serpentine arrangement of the calibration network **14** wherein the signal transmitting line of the calibration network is passed along the rows **r1**, **r2, r3**,..., of the array **13** in a zigzag pattern such that at least one coupler **16** is positioned in the vicinity of at least one of the radiating elements **12** of the array **13**. In this non-limiting example an array antenna **13** comprising four rows and four columns is demonstrated. A similar zigzag arrangement of the calibration network **14** may be constructed by passing the signal transmitting lines of the calibration network **14** along the columns **c1, c2, c3**,..., of the array **13**.

**Fig. 3B** demonstrates another possible arrangement of the calibration network **14**, wherein the signal transmitting lines form a spiral pattern arranged such that at least one coupler **16** is positioned in the vicinity of at least one of the radiating elements **12** of the array **13**. As will be recognized by those versed in the field of the invention, the calibration network of the present invention may be arranged in various different ways, forming patterns that are different from the zigzag and spiral patterns demonstrated in **Figs. 3A** and **3B**, and providing that at least one coupler of the calibration network is positioned in the vicinity of at least one of the radiating elements of the array.

**Fig. 4A** schematically illustrates another possible calibration network configuration **20** according to possible embodiments, wherein the calibration network **14a** is configured to feed two adjacently located radiating elements, **12x** and **12y**, having different polarizations. In this non-limiting example each coupling site **19g** is positioned/formed in the vicinity of two adjacently located radiating elements, **12x** and **12y**. As seen in the cross-sectional view shown in **Fig. 4B**, each coupling site **19g** includes respective two couplers, **16x** and **16y**. The couplers, **16x** and **16y**, are configured to emit radiation in the direction of radiating elements, **12x** and **12y**, respectively. As exemplified in **Fig. 4A**, the configuration of the calibration network is independent of the polarity of the radiating elements **12x** and **12y** coupled to its coupling sites, and the coupling sites **19g** may be formed in locations along the signal transmitting line that correspond to the locations of the radiating elements of the array antenna (*e.g.*, at opposing sides of the shielded cable *i.e.*, with angular displacement of about 180°), independent of either the cable's orientation and of the wavelength of electromagnetic signals passing through it.

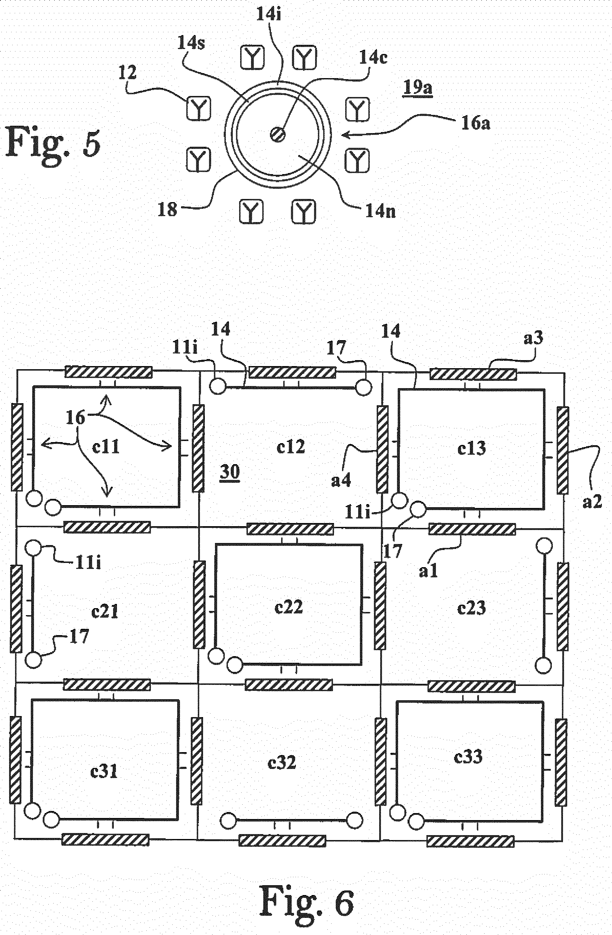

Fig. **5** shows a cross sectional view of the coupling site **19a** shown in **Fig. 2A** adapted to feed a plurality of radiating elements **12**. The coupler **16a** in this specific and non-limiting example is implemented by a circumferential aperture of about (or exactly) 360°, configured to communicate electromagnetic signals therethrough in radial directions relative to the central conductor **14c**. The length ($L_a$) of the aperture may be adjusted so as to guarantee a desired level/intensity of coupling with the radiating elements **12**.

Fig. **6** schematically illustrates a calibration network arrangement for an array antenna **30** comprising one or more cells $c_{ij}$ ($i>0$ and $j>0$ are positive integers), each comprising a number of radiating elements $a_p$ ($p>0$ a positive integers) according to some possible embodiments. In this specific and non-limiting example array antenna **30** comprises nine cells $c_{ij}$, the radiating elements $a_p$ are arranged in three rows ($1 \leq i \leq 3$) and three columns ($1 \leq j \leq 3$) matrix structure, and each cell $c_{ij}$ is square shaped and comprises four radiating elements, $a_p$ each being attached to, or embedded into, one of the side walls of the cell. A calibration network **14** is installed in each cell $c_{ij}$ such that a coupler **16** thereof is positioned in the vicinity of at least one of the radiating elements $a_p$ of the cell. In operation, a transceiver (**11**) is connected to input/output terminal **11i** of each calibration network **14**, and a matched load **17** is connected to the other end of the calibration network **14**. Optionally, and in some embodiments preferably, the input terminals of the calibration network **14** of some, or all, of the cells $c_{ij}$ are coupled to the same signal source **11**.

It is noted that the signal transmitting line based implementation of the calibration networks described herein provides calibration networks having very low energy losses, as compared to conventional waveguide based calibration networks (*e.g.*, microstrips).

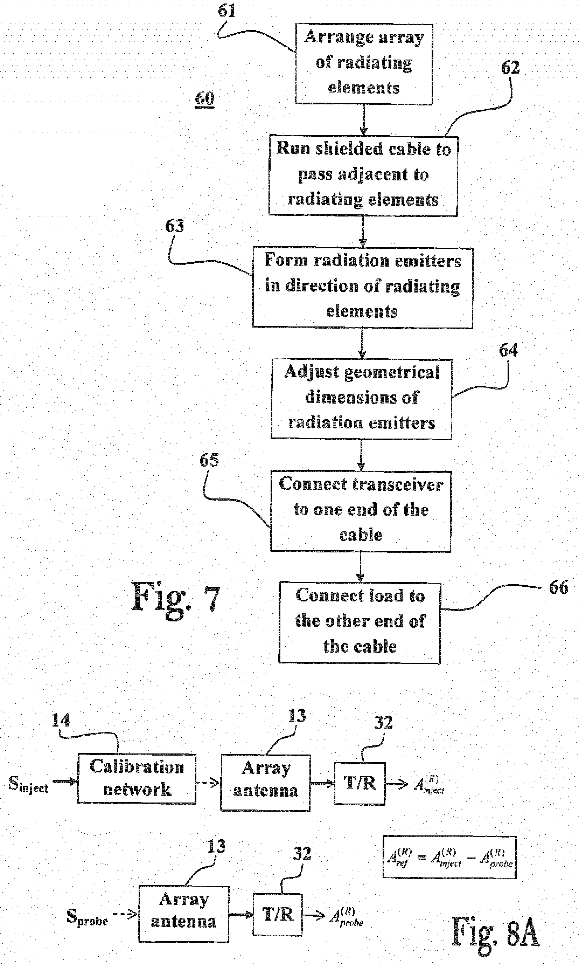

**Fig. 7** shows a flowchart **60** schematically illustrating a method of installing a calibration network (**14**) according to some possible embodiments. The installation may start by arranging the radiating elements of an array antenna in step **61** to provide a two-dimensional, or three-dimensional, array antenna. In step **62**, a signal transmitting line is installed in, or adjacent, the antenna array, such that the cable is passed adjacent to at least one, or all, of the radiating elements of the array. Next, in step **63**, portions of the cable passing near radiating elements of the array are defined as coupling sites and at least one coupler is formed in each one of said coupling sites. As exemplified hereinabove, one or more couplers may be formed in each coupling site by forming apertures on the circumference of the cable, each aperture facing at least one radiating element of the array, such that the signals radiated therefrom are directed towards the radiating element.

The shape and/or size of the apertures may be adjusted in step 64 to guarantee a desirable level of coupling with the at least one radiating element facing it. As explained hereinabove, the geometrical dimensions of each aperture may be adjusted according to its electrical distance from the input terminal of the cable and/or according to the geometrical dimensions of the other apertures formed in the cable. Finally, in step **65** a transceiver is connected to the input terminal **11i** of the calibration network, and if needed, in step **66** a matched load is connected to the other end of the shielded cable.

**Figs. 8A** to **8D** are block diagrams demonstrating use of the calibration network for generation of calibration data for signal paths of an array antenna. The bold arrowed lines in **Figs. 8A** to **8D** represent signals passing through the signal receive/transmit paths of the array antenna system, and the dashed arrowed lines represent signals radiated towards/from the radiating elements of the array antenna *e.g.*, through air. The generation of calibration data as demonstrated in **Fig. 8A** to **8D**, is typically carried out for a specific frequency, or predetermined frequency range, in which the array antenna operates.

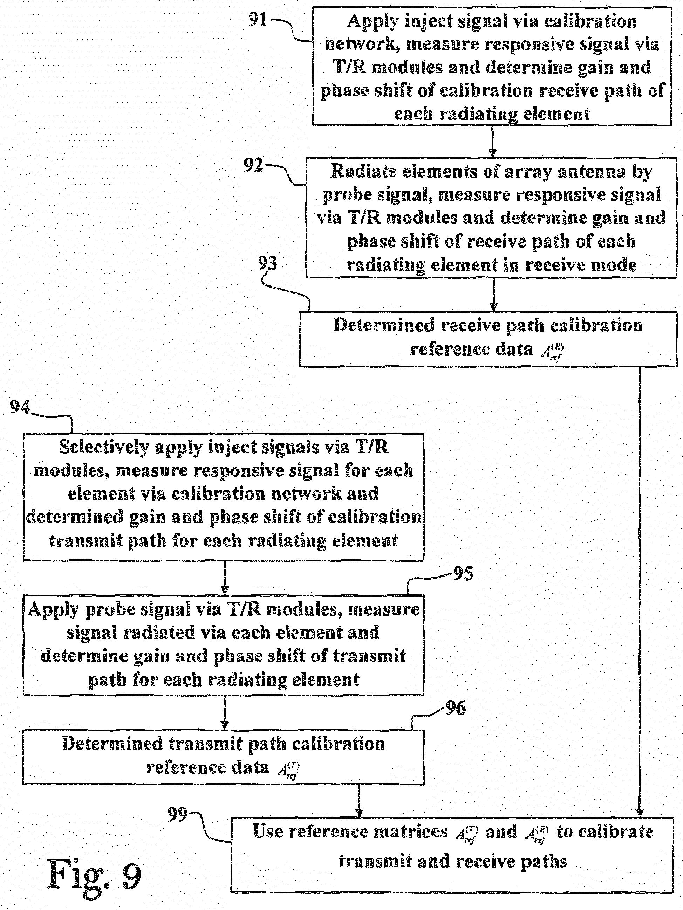

Steps 91-93 in **Fig. 9** demonstrate generation of calibration data for the receive path of the array antenna, as schematically illustrated in **Fig. 8A**. In step **91** a test signal ($S_{inject}$) is injected into each receive path of the radiating elements of the array antenna **13** through the calibration network **14**, and the signal received in each radiating element is measured by a respective transceiver module **32** coupled to it. The signal injected into the receive paths of the radiating elements is measured by the transceiver modules **32**, and is used to determine phase and amplitude data for each receive path. The phase and amplitude data is used to construct an inject receive path matrix $\left( A_{inject}^{(R)} \right)$ for the receive path of the array antenna.

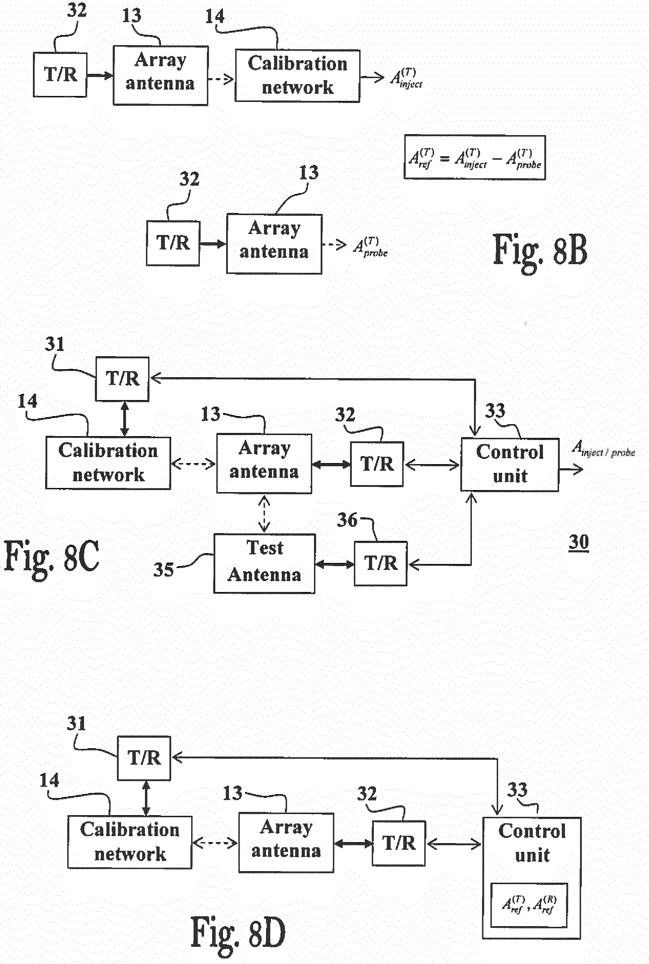

Additional calibration data is collected in step **92** by radiating probe signals $\mathbf{S_{probe}}$ (shown by dashed arrowed line, *e.g.,* by test antenna **35** shown in **Fig. 8C**) over each radiating element of the array **13**, and measuring by the transceiver modules **32** receive path probe signals received by each radiating element. Preferably, step **92** is separately carried out for each radiating element of the array (one at a time) in order to prevent cross talk artifacts in the receive paths measurements. Phase and amplitude of the probe signal measured through the receive path of each radiating element is used to construct a probe receive path matrix $\left( A_{probe}^{(R)} \right)$ for the signal receive path of the array antenna. In step **93** the data collected responsive to the inject and probe signals is used to generate reference data matrix $\left( A_{ref}^{(R)} \right)$ for calibration of the receive path of the array antenna by subtracting one signal receive path matrix from the other

$$e.g., \quad A_{ref}^{(R)} = A_{inject}^{(R)} - A_{probe}^{(R)}.$$

Steps **94-96** in **Fig. 9** demonstrate generation of calibration data for the transmit path of the array antenna, as schematically illustrated in **Fig. 8B**. In step **94** a test signal ($\mathbf{S_{inject}}$) is injected into the transmit path of each radiating element of the array antenna **13** by its respective transceiver module **32** and a responsive inject signal is measured through the calibration network **14**. The test signal injected into each transmit path is preferably multiplexed such that the test signal is injected into the transmit path of only one radiating element at a time. The phase and amplitude of the signal measured through the calibration network for each radiating element is used to construct an inject transmit path matrix $\left( A_{inject}^{(T)} \right)$ for the signal transmit path of the array antenna.

In step **95** additional calibration data is collected by feeding a probe signal $\mathbf{S_{probe}}$ to each radiating element of the array **13** and measuring the signals transmitted by each radiating element (*e.g.,* by test antenna **35** shown in **Fig. 8C**). The phase and amplitude of the signal transmitted from each radiating element is then determined and used to construct a probe transmit path matrix $\left( A_{probe}^{(T)} \right)$ for the signal transmit path of the array antenna. In step **96** the data collected for the inject and probe signals is used to generate reference data matrix $\left( A_{ref}^{(T)} \right)$ for calibration of the transmit path of the array antenna by subtracting one transmit path matrix from the other *e.g.,* $A_{ref}^{(T)} = A_{inject}^{(T)} - A_{probe}^{(T)}.$

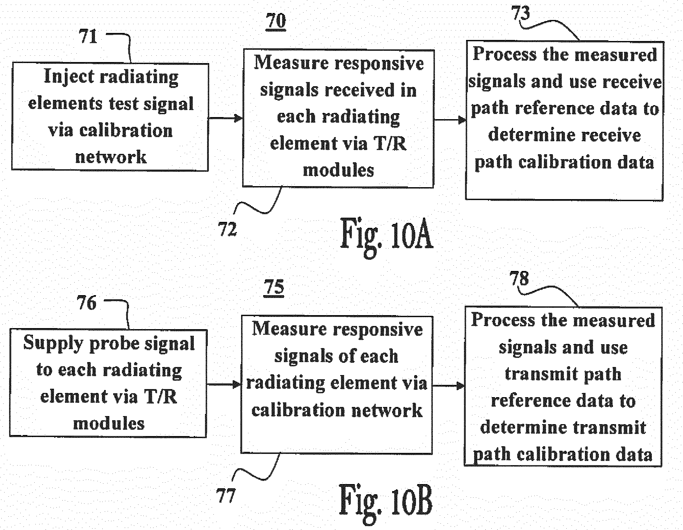

The receive and transmit path reference matrices obtained in this way for the array antenna reflects the phase and gain distortions which are introduced by the calibration network, while the contribution of the other elements in the signal paths (*e.g.,* receivers, transmitters, electrical conductors, etc.) is cancelled out. In step **99**, the receive and transmit paths reference matrices are used to calibrate the array antenna, as will be explained infra with reference to **Figs. 10A** and **10B**.

**Fig. 8C** demonstrates a system **30** usable for determining calibration data of the receive and transmit paths of the array antenna **13**. System **30** comprises the transceiver modules **32** of the receive and transmit paths and the calibration network **14**, which are coupled to the radiating elements of array antenna **13**, as also shown in **Figs. 8A** and **8B**, and a test antenna **35** electromagnetically coupled to the antenna array **13**. System **30** also comprises a transceiver module **31** for communicating electromagnetic signals with the calibration network **14**, a transceiver module **36** for communicating electromagnetic signals with the test antenna **35**, and a control unit **33** for controlling the operation of the transceiver modules and communicating data with them. The test antenna **35** may be implemented by an array antenna having the same arrangement of radiating elements as of the array antenna **13**, such that when placed one in front of the other, each radiating element of the test antenna **35** is positioned in front of a corresponding radiating element of the array antenna **13**.

**Fig. 8D** schematically illustrates use of the reference data matrices $A_{ref}^{(R)}$ and $A_{ref}^{(T)}$ for calibrating receive and transmit paths of the array antenna, according to some possible embodiments, as also demonstrated in Figs. **10A** and **10B**. The setup illustrated in **Fig. 8C** may be used to determine the reference calibration data for the receive and transmit paths of the array antenna in 'sterile' conditions (*e.g.,* laboratory), before operational use thereof, and the setup illustrated in **Fig. 8D** is suitable for generating calibration data for the array antenna when being in operational use.

**Figs. 10A** and **10B** schematically illustrate a method of calibrating signal paths of antenna elements of an antenna array. In this example the calibration is carried out using a calibration network as described hereinabove, which comprises a shielded signal transmission line having an end portion serving as a signal input/output terminal for transmitting and/or receiving signals propagating through the transmission line and a plurality of electromagnetic coupling sites respectively arranged adjacent to said antenna elements so as to provide electromagnetic coupling between said transmission line and the antenna elements. In this technique, calibration data is generated (steps **73** and **78**) using reference data indicative of propagation parameters of the calibration network in between said input/output terminal and said antenna elements, thereby enabling in-*situ* calibration of antenna elements of the antenna array.

The method generally comprises determining propagation parameters of a signal path of at least one antenna element of the antenna array by transmitting a calibration signal (in steps **71** and **76**) to propagate along a calibration signal path comprising said antenna element, a portion of said shielded transmission line in between a coupling site coupled to said antenna element and said input/output terminal, and a transmit/receive (TR) module coupled with said antenna element, detecting said transmitted signal (in steps **72** and **77**) and determining one or more propagation parameters of the calibration signal path, and determining one or more signal path parameters of said antenna element based on said propagation parameters of the calibration signal path and the propagation parameters of the calibration network indicated by said reference data.

With reference to flowchart **70** of **Fig. 10A**, receive path calibration is commenced in step **71** by injecting a test signal (*e.g.*, by the transceiver module **31**) through the calibration network **14** onto the radiating elements of the array antenna **13**. The electromagnetic radiation of the test signal supplied to the calibration network is emitted through the electromagnetic couplers of the calibration network onto the radiating elements of the antenna array, and in step **72** the transceiver modules **32** of the radiating elements are used to measure the signal received by each radiating element of the array antenna **13**. In step **73** the measured signals are processed to determine gain and phase shift data for the receive path of each radiating element of the array antenna. The receive path gain and phase shift data may be used to construct a receive path test signal matrix $A_{test}^{(R)}$. The receive path calibration data is then determined using the receive path reference data $A_{ref}^{(R)}$ to remove from the gain and phase shift data determined for the receive path distortions introduced into the measurements by the calibration network *e.g.,* $A_{calib}^{(R)} = A_{test}^{(R)} - A_{ref}^{(R)}$.

With reference to flowchart **75** of **Fig. 10B**, transmit path calibration is commenced in step **76** by supplying to the radiating elements **13** of the array antenna a probe signal via their respective transceiver modules **32**. Electromagnetic radiation emitted by each radiating element of the array antenna **13** in response to the probe signal is received in the calibration network through the electromagnetic couplers, and in step **77** the signals received through the calibration network **14** are measured (*e.g.*, by the transceiver module **31**). Steps **76** and **77** are preferably carried out separately for each radiating element to allow accurate measurement of transmit path signals for each radiating element of the array. In step **78** the signals measured for each transmit path are processed and transmit path gain and phase shift data are determined for the transmit path of each radiating element of the array antenna. The transmit path gain and phase shift data may be used to construct a transmit path test signal matrix $A_{test}^{(T)}$. The transmit path calibration data is then determined using the transmit path reference data $A_{ref}^{(T)}$ to remove from the gain and phase shift data determined for the transmit path distortions introduced into the measurements by the calibration network *e.g.,*

$$A_{calib}^{(T)} = A_{test}^{(T)} - A_{ref}^{(T)}.$$

As described hereinabove and shown in the associated Figs., the present invention provides an elastic/flexible feed signal calibration network usable for feeding electromagnetic signals to radiating elements of an array antenna, and related methods for constructing and using the same. While particular embodiments of the invention have been described, it will be understood, however, that the invention is not limited thereto, since modifications may be made by those skilled in the art, particularly in light of the foregoing teachings. As will be appreciated by the skilled person, the invention can be carried out in a great variety of ways, employing more than one technique from those described above, all without exceeding the scope of the invention.

## Claims

1. A calibration network for an antenna array, comprising a shielded signal transmission line (18) having an electrically conducting wire (14c) coaxially passing along an electrically conductive shielding sleeve (14s) electrically insulated therefrom, **characterized in that** said shielded signal transmission line (18) is configured and operable to propagate signals along its length and comprises one or more electromagnetic coupling sites (16) spaced-apart along its length and adapted for coupling said calibration network with a certain number of antenna elements (12) of an antenna array (13), each electromagnetic coupling site (16) comprises at least one aperture formed in said electrically conductive shielding sleeve (14s) of the shielded signal transmission line (18) for electromagnetic coupling between said shielded signal transmission line (18) and said antenna elements (12).

2. The calibration network of Claim 1 wherein the shielded signal transmission line is a bendable coaxial structure allowing adjusting the shape of the calibration network to position the electromagnetic coupling sites adjacent the antenna elements to be thereby electromagnetically coupled therewith.

3. The calibration network of Claim 1 or 2 wherein at least one of the electromagnetic coupling sites comprises more than one aperture arranged about a circumference of a portion of the shielded signal transmission line length.

4. The calibration network of any one of the preceding claims wherein properties of the electromagnetic coupling sites are configured to electromagnetically couple a predetermined fraction of a signal passing along the shielded signal transmission line to their respective antenna elements via the apertures.

5. The calibration network of claim 4 wherein the electromagnetic coupling sites are configured according to at least one of the following: at least one of a distance between at least some of the electromagnetic coupling sites and sizes of at least some of the electromagnetic coupling sites is selected to adjust magnitudes of the fractions of the coupled signals; and geometrical dimensions or sizes of at least some of the apertures are increased according to a distance of the coupling sites from an end portion of the shielded signal transmission line serving as a signal input/output terminal.

6. The calibration network of any one of the preceding claims comprising a matched load coupled to the shielded signal transmission line.

7. A calibration system comprising a calibration network according to any one of claims 1 to 6, the system comprising a calibration transceiver module connected to an input/output terminal of said calibration network and adapted to transmit and/or receive calibration signals propagating via said calibration network so as to electrically couple said signals with antenna elements of an antenna array that are located adjacent to the coupling sites of said calibration network; a reference data module adapted to store referenced data indicative of propagation parameters of said calibration network in between said input/output terminal and said antenna elements; and a processing module connectable to respective transmit/receive (TR) modules of said antenna elements of the antenna array, and to said calibration transceiver module and adapted to carry out the following:

    - operate said calibration transceiver and at least one of said TR modules associated with at least one antenna element to transmit and receive therebetween calibration signals propagating along a calibration signal path comprising: said TR module of the antenna element, said antenna element, and a portion of said shielded signal transmission line extending in between said antenna element and said input/output terminal; and thereby determine one or more propagation parameters of said calibration signal path; and
    - utilize said one or more parameters of the calibration signal path and said reference data to determine one or more parameters of a signal path of said antenna element, which comprises said TR module of the antenna element and said antenna element.

8. An antenna system comprising:

    an antenna array comprising an arrangement of a plurality of antenna elements; and
    a calibration network according to any one of claims 1 to 6 wherein said shielded signal transmission line of the calibration network is arranged such that the coupling sites thereof are adjacent to said antenna elements thereby electromagnetically coupled therewith.

9. The antenna system of claim 8 wherein the coupling sites of the calibration network are spaced apart from their respective antenna elements so as to obtain a predetermined level of electromagnetic coupling therebetween, and wherein the system comprises a calibration system according to claim 7.

10. A method of calibrating signal paths of antenna elements (12) of an antenna array (13), the method comprising:

    providing a calibration network comprising a shielded signal transmission line (18) having an end portion (11i) serving as a signal input/output terminal for transmitting and/or receiving signals propagating through the shielded signal transmission line (18) and a plurality of electromagnetic coupling sites (16) respectively arranged adjacent to said antenna elements (12), each of said plurality of electromagnetic coupling sites (16) comprises at least one aperture formed in an electrically conductive shielding sleeve (14s) of said shielded signal transmission line (18) so as to provide electromagnetic coupling between said shielded signal transmission line (18) and the antenna elements (12);
    providing reference data indicative of propagation parameters of said calibration network in between said input/output terminal (11i) and said antenna elements (12); and
    determining propagation parameters of signal path of at least one antenna element (12) of the antenna array (13) by carrying out the following:

        - transmitting a calibration signal to propagate along a calibration signal path comprising said antenna element (12), a portion of said shielded signal transmission line (18) in between an electromagnetic coupling site (16) coupled to said antenna element (12) and said input/output terminal (11i), and a transmit/receive (TR) module (32) coupled with said antenna element (12);
        - detecting said transmitted signal and determining one or more propagation parameters of the calibration signal path;
- determining one or more signal path parameters of said antenna element (12) based on said propagation parameters of the calibration signal path and the propagation parameters of the calibration network indicated by said reference dada;

thereby enabling in-*situ* calibration of antenna elements (12) of the antenna array (13).

11. The method of claim 10 wherein said reference data includes propagation parameters of the calibration network indicative of at least one of phase shifts and gain attenuations associated with propagation of signal in between said input/output terminal of the shielded signal transmission line and said antenna element; said one or more propagation parameters of the calibration signal path include at least one of a propagation phase delay and propagation gain attenuation along said calibration signal path; and said determining of the one or more signal path parameters of the antenna element includes processing said one or more propagation parameters of the calibration signal path and said propagation parameters of the calibration network to determine at least one of a phase shift and a gain attenuation associated with transmission and/or reception of a signal via said antenna element and the TR module coupled thereto.

12. The method of claim 10 or 11 wherein said providing of the reference data comprises determining data indicative of said propagation parameters of said calibration network in between said input/output terminal and said antenna elements by carrying out the following:

transmitting a test signal to propagate along a first path comprising a transmit/receive (TR) module associated with an antenna element of said array; and at least a portion of the calibration network in between a coupling site thereof coupled to said antenna element and said input/output terminal; and measuring the transmitted test signal to generate data indicative of propagation parameters thereof;
transmitting a probe signal to propagate along a second path comprising said antenna element and the TR module associated with the antenna element; and measuring the transmitted probe signal to generate data indicative of propagation parameters thereof;
processing the data of the propagation parameters of the test and the probe signals and determining propagation parameters of said calibration network in between said input/output terminal and said antenna element.

13. The method of any one of claims 10 to 12 adapted to separately calibrate transmit and receive paths of said antenna element, wherein:

in calibration of said receive path, said calibration signal is injected to said signal path via said input/output terminal and received by said TR module of said antenna element; and
in calibration of said transmit path, said calibration signal is injected to said signal path by said TR module of said antenna element and received at said input/output terminal.

14. The method of any one of claims 10 to 13 wherein said shielded signal transmission line of the calibration network comprises a coaxial transmission line having an electrically conducting wire coaxially passing within an electrically conductive shielding sleeve electrically insulated therefrom, and wherein said coaxial transmission line is bent for passing adjacent to each antenna element of the array antenna, such that apertures formed in the shielding sleeve of the coaxial transmission line serving as coupling sites are located in the vicinity of the antenna elements thereby electromagnetically coupling between said coaxial transmission line and said antenna elements.

15. The method of claim 14 comprising at least one of the following: adjusting geometrical dimensions of at least some of the apertures to guarantee coupling of a predetermined fraction of a signal passing in the coaxial transmission line through them; adjusting a distance between at least some of the coupling sites to guarantee coupling of a predetermined fraction of a signal passing in the coaxial transmission line through them; and adjusting a distance between at least one of the coupling sites and its respective radiating element to provide a predetermined level of signal coupling therebetween.

**Patentansprüche**

1. Kalibrierungsnetzwerk für ein Antennenarray, das eine geschirmte Signalübertragungsleitung (18) umfasst, die einen elektrisch leitenden Draht (14c) aufweist, der koaxial entlang einer elektrisch leitfähigen Schirmhülse (14s) verläuft, die dagegen elektrisch isoliert ist, **dadurch gekennzeichnet, dass** die geschirmte Signalübertragungsleitung (18) dazu ausgelegt und betreibbar ist, Signale entlang ihrer Länge auszubreiten, und eine oder mehrere elektromagnetische Kopplungsstellen (16) umfasst, die entlang ihrer Länge beabstandet und zum Koppeln des Kalibrierungsnetzwerks mit einer gewissen Anzahl von Antennenelementen (12) eines Antennenarrays (13) angepasst sind, jede elektromagnetische Kopplungsstelle (16) mindestens eine Öffnung umfasst, die in der elektrisch leitfähigen Schirmhülse (14s) der geschirmten Signalübertragungsleitung (18) zum elektromagnetischen Koppeln zwischen der geschirmten Signalübertragungsleitung (18) und den Antennenelementen (12) gebildet ist.

2. Kalibrierungsnetzwerk nach Anspruch 1, wobei die geschirmte Signalübertragungsleitung eine biegbare Koaxialstruktur ist, die das Angleichen der Form des Kalibrierungsnetzwerks erlaubt, um die elektromagnetischen Kopplungsstellen neben den Antennenelementen zu positionieren, um dadurch damit elektromagnetisch gekoppelt zu sein.

3. Kalibrierungsnetzwerk nach Anspruch 1 oder 2, wobei mindestens eine der elektromagnetischen Kopplungsstellen mehr als eine Öffnung umfasst, die um einen Umfang eines Abschnitts der geschirmten Signalübertragungsleitungslänge angeordnet ist.

4. Kalibrierungsnetzwerk nach einem der vorhergehenden Ansprüche, wobei Eigenschaften der elektromagnetischen Kopplungsstellen dazu ausgelegt sind, einen vorbestimmten Anteil eines Signals, das entlang der geschirmten Signalübertragungsleitung verläuft, via die Öffnungen an deren jeweilige Antennenelemente elektromagnetisch zu koppeln.

5. Kalibrierungsnetzwerk nach Anspruch 4, wobei die elektromagnetischen Kopplungsstellen mindestens gemäß einem der Folgenden ausgelegt sind: mindestens eines von einem Abstand zwischen mindestens einigen der elektromagnetischen Kopplungsstellen und Größen von mindestens einigen der elektromagnetischen Kopplungsstellen wird ausgewählt, um Größenordnungen der Anteile der gekoppelten Signale anzugleichen; und geometrische Dimensionen oder Größen mindestens einiger der Öffnungen werden gemäß einem Abstand der Kopplungsstellen von einem Endabschnitt der geschirmten Signalübertragungsleitung, der als Signalein-/-ausgangsanschluss fungiert, erhöht.

6. Kalibrierungsnetzwerk nach einem der vorhergehenden Ansprüche, das eine abgestimmte Last umfasst, die an die geschirmte Signalübertragungsleitung gekoppelt ist.

7. Kalibrierungssystem, das ein Kalibrierungsnetzwerk gemäß einem der Ansprüche 1 bis 6 umfasst, wobei das System ein Kalibrierungssendeempfängermodul umfasst, das mit einem Ein-/Ausgangsanschluss des Kalibrierungsnetzwerks verbunden ist und angepasst, Kalibrierungssignale, die via das Kalibrierungsnetzwerk ausgebreitet werden, zu senden und/oder zu empfangen, um die Signale mit Antennenelementen eines Antennenarrays, die sich neben den Kopplungsstellen des Kalibrierungsnetzwerks befinden, elektrisch zu koppeln; ein Referenzdatenmodul, das angepasst ist, referenzierte Daten zu speichern, die Ausbreitungsparameter des Kalibrierungsnetzwerks zwischen dem Ein-/Ausgangsanschluss und den Antennenelementen anzeigen; und ein Verarbeitungsmodul, das mit jeweiligen Sende-/Empfangsmodulen (TR-Modulen) der Antennenelemente des Antennenarrays und mit dem Kalibrierungssendeempfängermodul verbindbar ist und angepasst, Folgendes auszuführen:

- Betreiben des Kalibrierungssendeempfängers und mindestens eines der TR-Module, die mit mindestens einem Antennenelement verknüpft sind, um dazwischen Kalibrierungssignale zu senden und zu empfangen, die sich entlang eines Kalibrierungssignalpfades ausbreiten, der Folgendes umfasst: das TR-Modul des Antennenelements, das Antennenelement und einen Abschnitt der geschirmten Signalübertragungsleitung, der sich zwischen dem Antennenelement und dem Ein-/Ausgangsanschluss erstreckt; und dadurch einen oder mehrere Ausbreitungsparameter des Kalibrierungssignalpfades zu bestimmen; und
- Einsetzen des einen oder der mehreren Parameter des Kalibrierungssignalpfades und der Referenzdaten, um einen oder mehrere Parameter eines Signalpfades des Antennenelements zu bestimmen, der das TR-Modul des Antennenelements und das Antennenelement umfasst.

8. Antennensystem, das Folgendes umfasst:

ein Antennenarray, das eine Anordnung einer Vielzahl von Antennenelementen umfasst; und ein Kalibrierungsnetzwerk nach einem der Ansprüche 1 bis 6, wobei die geschirmte Signalübertragungsleitung des Kalibrierungsnetzwerks derart angeordnet ist, dass die Kopplungsstellen davon sich neben den Antennenelementen befinden und dadurch elektromagnetisch damit gekoppelt sind.

9. Antennensystem nach Anspruch 8, wobei die Kopplungsstellen des Kalibrierungsnetzwerks von ihren jeweiligen Antennenelementen beabstandet sind, um ein vorbestimmtes Niveau der elektromagnetischen Kopplung dazwischen zu erhalten, und wobei das System ein Kalibrierungssystem nach Anspruch 7 umfasst.

10. Verfahren zum Kalibrieren von Signalpfaden von Antennenelementen (12) eines Antennenarrays (13), wobei das Verfahren Folgendes umfasst:

Bereitstellen eines Kalibrierungsnetzwerks, das eine geschirmte Signalübertragungsleitung (18) umfasst, die einen Endabschnitt (11i) aufweist, der als Signalein-/-ausgangsanschluss zum übertragen und/oder Empfangen von Signalen fungiert, die sich durch die geschirmte Signalübertragungsleitung (18) ausbreiten, und eine Vielzahl von elektromagnetischen Kopplungsstellen (16), die jeweils neben den Antennenelementen (12) angeordnet sind, wobei jede der Vielzahl von elektromagnetischen Kopplungsstellen (16) mindestens eine Öffnung umfasst, die in einer elektrisch leitfähigen Schirmhülse (14s) der geschirmten Signalübertragungsleitung (18) gebildet ist, um eine elektromagnetische Kopplung zwischen der geschirmten Signalübertragungsleitung (18) und den Antennenelementen (12) bereitzustellen;

Bereitstellen von Referenzdaten, die Ausbreitungsparameter des Kalibrierungsnetzwerks zwischen dem Ein-/Ausgangsanschluss (11i) und den Antennenelementen (12) anzeigen; und

Bereitstellen von Ausbreitungsparametern eines Signalpfads mindestens eines Antennenelements (12) des Antennenarrays (13) durch Ausführen von Folgendem:

- Übertragen eines Kalibrierungssignals, das sich entlang eines Kalibrierungssignalpfades ausbreiten soll, der das Antennenelement (12), einen Abschnitt der geschirmten Signalübertragungsleitung (18) zwischen einer elektromagnetischen Kopplungsstelle (16), die an das Antennenelement (12) gekoppelt ist, und einem Ein-/Ausgangsanschluss (11i) und ein Sende-/Empfangsmodul (TR-Modul) (32), das mit dem Antennenelement (12) gekoppelt ist, umfasst;
- Detektieren des übertragenen Signals und Bestimmen eines oder mehrerer Ausbreitungsparameter des Kalibrierungssignalpfades;
- Bestimmen eines oder mehrerer Signalpfadparameter des Antennenelements (12) auf Basis der Ausbreitungsparameter des Kalibrierungssignalpfads und der Ausbreitungsparameter des Kalibrierungsnetzwerks, die von den Referenzdaten angezeigt werden;

dadurch Ermöglichen einer In-situ-Kalibrierung der Antennenelemente (12) des Antennenarrays (13).

11. Verfahren nach Anspruch 10, wobei die Referenzdaten Ausbreitungsparameter des Kalibrierungsnetzwerks beinhalten, die mindestens eines von Phasenverschiebungen und Verstärkungsdämpfungen anzeigen, die mit der Ausbreitung eines Signals zwischen dem Ein-/Ausgangsanschluss der geschirmten Signalübertragungsleitung und dem Antennenelement verknüpft sind; wobei der eine oder die mehreren Ausbreitungsparameter des Kalibrierungssignalpfades mindestens eines einer Ausbreitungsphasenverzögerung und einer Ausbreitungsverstärkungsdämpfung entlang des Kalibrierungssignalpfades beinhalten und wobei das Bestimmen des einen oder der mehreren Signalpfadparameter des Antennenelements das Verarbeiten des einen oder der mehreren Ausbreitungsparameter des Kalibrierungssignalpfades und der Ausbreitungsparameter des Kalibrierungsnetzwerks beinhaltet, um mindestens eines einer Phasenverschiebung und einer Verstärkungsdämpfung zu bestimmen, die mit der Übertragung und/oder dem Empfang eines Signals via das Antennenelement und das TR-Modul, das daran gekoppelt ist, verknüpft sind.

12. Verfahren nach Anspruch 10 oder 11, wobei das Bereitstellen von Referenzdaten das Bestimmen von Daten, die die Ausbreitungsparameter des Kalibrierungsnetzwerks zwischen dem Ein-/Ausgangsanschluss und den Antennenelementen anzeigen, durch Ausführen von Folgendem umfasst:

Übertragen eines Testsignals, das sich entlang eines ersten Pfades ausbreiten soll, der ein Sende-/Empfangsmodul (TR-Modul), das mit einem Antennenelement des Arrays verknüpft ist; und mindestens einen Abschnitt des Kalibrierungsnetzwerks zwischen einer Kopplungsstelle davon, die an das Antennenelement gekoppelt ist, und dem Ein-/Ausgangsanschluss umfasst; und Messen des übertragenen Testsignals, um Daten zu erzeugen, die Ausbreitungsparameter davon anzeigen;

Übertragen eines Sondensignals, das sich entlang eines zweiten Pfades ausbreiten soll, der das Antennenelement und das TR-Modul, das mit dem Antennenelement verknüpft ist, umfasst; und Messen des übertragenen Sondensignals, um Daten zu erzeugen, die Ausbreitungsparameter davon anzeigen;

Verarbeiten der Daten der Ausbreitungsparameter des Test- und des Sondensignals und Bestimmen von Ausbreitungsparametern des Kalibrierungsnetzwerks zwischen dem Ein-/Ausgangsanschluss und dem Antennenelement.

13. Verfahren nach einem der Ansprüche 10 bis 12, das angepasst ist, Sende- und Empfangspfade des Antennenelements separat zu kalibrieren, wobei:

bei der Kalibrierung des Empfangspfads das Kalibrierungssignal via den Ein-/Ausgangsanschluss in den Signalpfad injiziert und vom TR-Modul des Antennenelements empfangen wird; und

bei der Kalibrierung des Sendepfads das Kalibrierungssignal vom TR-Modul des Antennenelements in den Signalpfad injiziert und am Ein-/Ausgangsanschluss empfangen wird.

14. Verfahren nach einem der Ansprüche 10 bis 13, wobei die geschirmte Signalübertragungsleitung des Kalibrierungsnetzwerks eine Koaxialübertragungsleitung umfasst, die einen elektrisch leitenden Draht aufweist, der koaxial in einer elektrisch leitfähigen Schirmhülse verläuft, die elektrisch dagegen isoliert ist, und wobei die Koaxialübertragungsleitung gebogen ist, um neben jedem Antennenelement der Arrayantenne zu verlaufen, derart, dass Öffnungen, die in der Schirmhülse der Koaxialübertragungsleitung gebildet sind und als Kopplungsstellen fungieren, sich in der Nähe der Antennenelemente befinden, wodurch eine elektromagnetische Kopplung zwischen der Koaxialübertragungsleitung und den Antennenelementen entsteht.

15. Verfahren nach Anspruch 14, das mindestens eines von Folgendem umfasst: Angleichen geometrischer Dimensionen mindestens einiger der Öffnungen, um eine Kopplung eines vorbestimmten Anteils eines Signals, das in der Koaxialübertragungsleitung durch sie verläuft, zu garantieren; Angleichen eines Abstands zwischen mindestens einigen der Kopplungsstellen, um eine Kopplung eines vorbestimmten Anteils eines Signals, das in der Koaxialübertragungsleitung durch sie verläuft, zu garantieren; und Angleichen eines Abstands zwischen mindestens einer der Kopplungsstellen und deren jeweiligem Strahlungselement, um ein vorbestimmtes Niveau der Signalkopplung dazwischen bereitzustellen.

**Revendications**

1. Réseau d'étalonnage pour un réseau d'antennes, comprenant une ligne de transmission de signaux blindée (18) comportant un fil électriquement conducteur (14c) s'étendant coaxialement le long d'un manchon blindé électriquement conducteur (14s) électriquement isolé par rapport à celui-ci, **caractérisé en ce que** ladite ligne de transmission de signaux blindée (18) est configurée et opérationnelle pour propager des signaux le long de sa longueur et comprend un ou plusieurs sites de couplage électromagnétique (16) espacés le long de sa longueur et adaptés pour coupler ledit réseau d'étalonnage avec un certain nombre d'éléments d'antenne (12) d'un réseau d'antennes (13), chaque site de couplage électromagnétique (16) comprenant au moins une ouverture formée dans ledit manchon blindé électriquement conducteur (14s) de la ligne de transmission de signaux blindée (18) pour un couplage électromagnétique entre ladite ligne de transmission de signaux blindée (18) et lesdits éléments d'antenne (12) .

2. Réseau d'étalonnage selon la revendication 1, dans lequel la ligne de transmission de signaux blindée est une structure coaxiale flexible permettant d'ajuster la forme du réseau d'étalonnage pour positionner les sites de couplage électromagnétique à côté des éléments d'antenne destinés à être ainsi électromagnétiquement couplés à ceux-ci.

3. Réseau d'étalonnage selon la revendication 1 ou 2, dans lequel au moins l'un des sites de couplage électromagnétique comprend plus d'une ouverture disposée autour d'une circonférence d'une partie de la longueur de ligne de transmission de signaux blindée.

4. Réseau d'étalonnage selon l'une quelconque des revendications précédentes, dans lequel des propriétés des sites de couplage électromagnétique sont configurées pour coupler électromagnétiquement une fraction prédéterminée d'un signal passant le long de la ligne de transmission de signaux blindée à leurs éléments d'antenne respectifs par le biais des ouvertures.

5. Réseau d'étalonnage selon la revendication 4, dans lequel les sites de couplage électromagnétique sont configurés selon l'un au moins des éléments suivantes : au moins l'un parmi une distance entre au moins certains des sites de couplage électromagnétique et des tailles d'au moins certains des sites de couplage électromagnétique est sélectionné pour régler les ampleurs des fractions des signaux couplés ; et des dimensions ou tailles géométriques d'au moins certaines des ouvertures sont augmentées selon une distance entre les sites de couplage et une partie d'extrémité de la ligne de transmission de signaux blindée servant de borne d'entrée/de sortie de signaux.

6. Réseau d'étalonnage selon l'une quelconque des revendications précédentes, comprenant une charge adaptée couplée à la ligne de transmission de signaux blindée.

7. Système d'étalonnage comprenant un réseau d'étalonnage selon l'une quelconque des revendications 1 à 6, le système comprenant un module émetteur-récepteur d'étalonnage relié à une borne d'entrée/de sortie dudit réseau d'étalonnage et adapté pour transmettre et/ou recevoir des signaux d'étalonnage se propageant par le biais dudit réseau d'étalonnage de manière à coupler électriquement lesdits signaux avec des éléments d'antenne d'un réseau d'antennes, situés à côté des sites de couplage dudit réseau d'étalonnage ; un module de données de référence adapté pour stocker des données référencées indiquant des paramètres de propagation dudit réseau d'étalonnage entre ladite borne d'entrée/de sortie et lesdits éléments d'antenne ; et un module de traitement apte à être relié à des modules d'émission/réception (TR) respectifs desdits éléments d'antenne du réseau d'antennes et audit module émetteur-récepteur d'étalonnage et adapté pour exécuter les actions suivantes :

- commander ledit émetteur-récepteur d'étalonnage et au moins l'un desdits modules TR associés à au moins un élément d'antenne pour la transmission et la réception entre ceux-ci de signaux d'étalonnage se propageant le long d'un trajet de signaux d'étalonnage comprenant : ledit module TR dudit élément d'antenne, ledit élément d'antenne et une partie de ladite ligne de transmission de signaux blindée s'étendant entre ledit élément d'antenne et ladite borne d'entrée/de sortie ; et pour ainsi déterminer un ou plusieurs paramètres de propagation dudit trajet de signaux d'étalonnage ; et
- utilisation desdits un ou plusieurs paramètres du trajet de signaux d'étalonnage et lesdites données de référence pour déterminer un ou plusieurs paramètres d'un trajet de signaux dudit élément d'antenne, lequel comprend ledit module TR de l'élément d'antenne et ledit élément d'antenne.

**8.** Système d'antennes comprenant :

un réseau d'antennes comprenant un arrangement d'une pluralité d'éléments d'antenne ; et
un réseau d'étalonnage selon l'une quelconque des revendications 1 à 6, dans lequel ladite ligne de transmission de signaux blindée du réseau d'étalonnage est disposée de manière à ce que les sites de couplage de ceux-ci soient adjacents auxdits éléments d'antenne ainsi couplés électromagnétiquement à ceux-ci.

**9.** Système d'antennes selon la revendication 8, dans lequel les sites de couplage du réseau d'étalonnage sont espacés de leurs éléments d'antenne respectifs de manière à obtenir un niveau de couplage électromagnétique prédéterminé entre ceux-ci, et dans lequel le système comprend un système d'étalonnage selon la revendication 7.

**10.** Procédé d'étalonnage de trajets de signaux d'éléments d'antenne (12) d'un réseau d'antennes (13), le procédé comprenant :

la mise à disposition d'un réseau d'étalonnage comprenant une ligne de transmission de signaux blindée (18) comportant une partie d'extrémité (11i) servant de borne d'entrée/de sortie de signaux pour la transmission et/ou la réception de signaux se propageant à travers la ligne de transmission de signaux blindée (18) et une pluralité de sites de couplage électromagnétique (16) respectivement disposés à côté desdits éléments d'antenne (12), chacun parmi ladite pluralité de sites de couplage électromagnétique (16) comprenant au moins une ouverture formée dans un manchon blindé électriquement conducteur (14s) et ladite ligne de transmission de signaux blindée (18) de manière à assurer un couplage électromagnétique entre ladite ligne de transmission de signaux blindée (18) et les éléments d'antenne (12) ;
la mise à disposition de données de référence indiquant des paramètres de propagation dudit réseau d'étalonnage entre ladite borne d'entrée/de sortie (11i) et lesdits éléments d'antenne (12) ; et
la détermination de paramètres de propagation d'un trajet de signaux d'au moins un élément d'antenne (12) du réseau d'antennes (13) en exécutant les actions suivantes :

- transmission d'un signal d'étalonnage se propageant le long d'un trajet de signaux d'étalonnage comprenant ledit élément d'antenne (12) une partie de ladite ligne de transmission de signaux blindée (18) entre un site de couplage électromagnétique (16) couplé audit élément d'antenne (12) et ladite borne d'entrée/de sortie (11i), et un module (32) d'émission/réception (TR) couplé audit élément d'antenne (12) ;
- détection dudit signal transmis et détermination d'un ou de plusieurs paramètres de propagation du trajet de signaux d'étalonnage ;
- détermination d'un ou de plusieurs paramètres de trajet de signaux dudit élément d'antenne (12) sur la base desdits paramètres de propagation du trajet de signaux d'étalonnage et des paramètres de propagation du réseau d'étalonnage indiqués par lesdites données de référence ;

permettant ainsi un étalonnage in-situ d'éléments d'antenne (12) du réseau d'antennes (13).

**11.** Procédé selon la revendication 10, dans lequel lesdites données de référence incluent des paramètres de propagation du réseau d'étalonnage indiquant au moins l'un parmi des décalages de phase et des atténuations de gain associés à la propagation d'un signal entre ladite borne d'entrée/de sortie de la ligne de transmission de signaux blindée et ledit élément d'antenne ; lesdits un ou plusieurs paramètres de propagation de trajet de signaux d'étalonnage incluent au moins l'un parmi un retard de phase de propagation et une atténuation de gain de propagation le long dudit trajet de signaux d'étalonnage ; et ladite détermination des un ou plusieurs paramètres de trajet de signaux de l'élément d'antenne inclut le traitement desdits un ou plusieurs paramètres de propagation du trajet de signaux d'étalonnage et desdits paramètres de propagation du réseau d'étalonnage pour déterminer au moins l'un parmi un décalage de phase et une atténuation de gain associés à la transmission et/ou à la réception d'un signal par le biais dudit élément d'antenne et dudit module TR couplé à celui-ci.

12. Procédé selon la revendication 10 ou 11, dans lequel ladite mise à disposition des données de référence comprend la détermination de données indiquant lesdits paramètres de propagation dudit réseau d'étalonnage entre ladite borne d'entrée/de sortie et lesdits éléments d'antenne en exécutant les actions suivantes :

transmission d'un signal de test se propageant le long d'un premier trajet comprenant un module d'émission/réception (TR) associé à un élément d'antenne dudit réseau ; et au moins une partie du réseau d'étalonnage entre un site de couplage de celui-ci couplé audit élément d'antenne et ladite borne d'entrée/de sortie ; et mesure dudit signal de test transmis pour générer des données indiquant des paramètres de propagation de celui-ci ;
transmission d'un signal d'essai se propageant le long d'un deuxième trajet comprenant ledit élément d'antenne et le module TR associé à l'élément d'antenne ; et mesure du signal d'essai transmis pour générer des données indiquant des paramètres de propagation de celui-ci ;
traitement des données des paramètres de propagation du signal de test et du signal d'essai, et détermination de paramètres de propagation dudit réseau d'étalonnage entre ladite borne d'entrée/de sortie et ledit élément d'antenne.

13. Procédé selon l'une quelconque des revendications 10 à 12, adapté pour étalonner séparément des trajets de transmission et de réception dudit élément d'antenne, dans lequel :

dans l'étalonnage dudit trajet de réception, ledit signal d'étalonnage est injecté dans ledit trajet de signaux par le biais de ladite borne d'entrée/de sortie et reçu par ledit module TR dudit élément d'antenne ; et
dans l'étalonnage dudit trajet de transmission, ledit signal d'étalonnage est injecté dans ledit trajet de signaux par ledit module TR dudit élément d'antenne et reçu au niveau de ladite borne d'entrée/de sortie.

14. Procédé selon l'une quelconque des revendications 10 à 13, dans lequel ladite ligne de transmission de signaux blindée du réseau d'étalonnage comprend une ligne de transmission coaxiale comportant un fil électriquement conducteur s'étendant coaxialement dans un manchon blindé électriquement conducteur, lequel est électriquement isolé par rapport à celle-ci, et dans lequel ladite ligne de transmission coaxiale est fléchie pour passer à côté de chaque élément d'antenne du réseau d'antennes, de manière à ce que des ouvertures formées dans le manchon blindé de la ligne de transmission coaxiale servant de sites de couplage se trouvent à proximité des éléments d'antenne, couplant ainsi électromagnétiquement ladite ligne de transmission coaxiale avec lesdits éléments d'antenne.

15. Procédé selon la revendication 14, comprenant au moins l'une des actions suivantes : ajustement des dimensions géométriques d'au moins certaines des ouvertures pour garantir le couplage d'une fraction prédéterminée d'un signal passant dans la ligne de transmission coaxiale à travers celles-ci ; ajustement d'une distance entre au moins certains des sites de couplage pour garantir le couplage d'une fraction prédéterminée d'un signal passant dans la ligne de transmission coaxiale à travers ceux-ci ; et ajustement d'une distance entre au moins certains des sites de couplage et leur élément rayonnant respectif pour fournir un niveau de couplage de signaux prédéterminé entre ceux-ci.

Fig. 1

Fig. 2A

Fig. 2B

Fig. 2C

Fig. 2D

Fig. 2E

Fig. 3A

Fig. 3B

Fig. 4A

Fig. 4B

Fig. 5

Fig. 6

61

Arrange array
of radiating
elements

62

60

Run shielded cable to
pass adjacent to
radiating elements

63

Form radiation emitters
in direction of radiating
elements

64

Adjust geometrical
dimensions of
radiation emitters

65

Connect transceiver
to one end of the
cable

Fig. 7

Connect load to
the other end of
the cable

66

$S_{inject}$ → Calibration network --> Array antenna → T/R → $A_{inject}^{(R)}$

14    13    32

$S_{probe}$ --> Array antenna → T/R → $A_{probe}^{(R)}$

13    32

$$A_{ref}^{(R)} = A_{inject}^{(R)} - A_{probe}^{(R)}$$

Fig. 8A

Fig. 8B

$$A_{ref}^{(T)} = A_{inject}^{(T)} - A_{probe}^{(T)}$$

Fig. 8C

Fig. 8D

91 —⟍ | Apply inject signal via calibration network, measure responsive signal via T/R modules and determine gain and phase shift of calibration receive path of each radiating element

92 —⟍ | Radiate elements of array antenna by probe signal, measure responsive signal via T/R modules and determine gain and phase shift of receive path of each radiating element in receive mode

93 —⟍ | Determined receive path calibration reference data $A_{ref}^{(R)}$

94 —⟍ | Selectively apply inject signals via T/R modules, measure responsive signal for each element via calibration network and determined gain and phase shift of calibration transmit path for each radiating element

95 —⟍ | Apply probe signal via T/R modules, measure signal radiated via each element and determine gain and phase shift of transmit path for each radiating element

96 —⟍ | Determined transmit path calibration reference data $A_{ref}^{(T)}$

99 —⟍ | Use reference matrices $A_{ref}^{(T)}$ and $A_{ref}^{(R)}$ to calibrate transmit and receive paths

Fig. 9

71

Inject radiating
elements test signal
via calibration
network

70

Measure responsive
signals received in
each radiating
element via T/R
modules

73

Process the measured
signals and use receive
path reference data to
determine receive
path calibration data

72

**Fig. 10A**

76

Supply probe signal
to each radiating
element via T/R
modules

75

Measure responsive
signals of each
radiating element via
calibration network

78

Process the measured
signals and use
transmit path
reference data to
determine transmit
path calibration data

77

**Fig. 10B**

25

**EP 3 093 687 B1**

**Patent documents cited in the description**

- EP 0127337 A
- US 5977930 A
- US 6236839 B